# NEW EUROPEAN PATENT SPECIFICATION

(11) **EP 1 661 373 B3**
(45) Date of publication of this specification: **17.07.2019**
(45) Mention of the grant of the patent: 17.01.2018
(21) Application number: 04738941.6
(22) Date of filing: 23.06.2004
(51) Int. Cl.: H04M 1/05, H04M 1/60, H04R 5/033, H04R 25/00

(54) **DIGITAL COMMUNICATION DEVICE**
DIGITALES KOMMUNIKATIONSGERÄT
DISPOSITIF DE COMMUNICATION NUMÉRIQUE

(30) Priority: 26.08.2003 DK 200301219
(43) Date of publication of application: 31.05.2006
(73) Proprietor: OTICON A/S, 2765 Smørum (DK)
(72) Inventor: JØRGENSEN, Ivan H.H., 2900 Hellerup (DK); ESSABAR, Mohamad, DK-2765 Smorum (DK)
(86) International application number: PCT/DK2004/000444
(87) International publication number: WO 2005/020549

(56) References cited:
- WO-A1-03/047309
- US-A- 5 796 848
- US-A- 5 857 060
- US-B1- 6 424 820
- US-B1- 6 546 109

## Description

### AREA OF THE INVENTION

The invention concerns a digital communication device like a hearing aid or a headset. In such devices a receiver or loudspeaker unit is used, which produces an audio signal which is presented to the ear of the user. In modem digital devices the signal served at the receiver is a modulated pulsed signal with high frequency shifting rate. When a signal of the above kind is served at a loudspeaker, the loudspeaker coil and other electronic parts will function as a filter, such that the audio signal produced will have a reasonable quality. An example is provided by WO03/047309.

### BACKGROUND OF THE INVENTION

The high frequency shifting rate will also cause a considerable electromagnetic radiation noise to be produced from the feed lines and from the coil in the loudspeaker. This radiation may be picked up by other parts of the communication device, and especially if the communication device has a coil or antenna for wireless reception of signals this is a problem. This will cause the Noise to Signal Ratio (NSR) from the wireless reception to degrade. The radiation from the wires or feed lines can be reduced by use of coaxial cables. The invention is targeted at reducing the radiation from the speaker case.

### SUMMARY OF THE INVENTION

It is an object of the invention to provide a digital communication device with improved NSR from the wireless reception of signals. It is a further object of the invention to provide a hearing aid with a receiver which is served with a modulated pulsed signal and a wireless reception antenna where the NSR of the wireless reception is not seriously degraded by electro- and/or magnetic radiation from the signal served at the receiver. The proposed solution according to claim 1 attenuates the radiated fields present in a hearing aid or other communication device.

The solution targets the fields radiated from the speaker. The speaker case in conventional hearing aid or other communication devices is not connected to any electrical potential in the system and therefore has a floating potential. The speaker case is energised and radiates a considerable electrical field in its proximity. Connecting the speaker case to a well defined stable potential almost eliminates the radiated field.

Preferably the speaker case is connected to the negative pole of the power supply.

### BRIEF DESCRIPTION OF THE DRAWINGS

Fig. 1 Schematic representation of a hearing aid with the receiver.
Fig. 2 is a diagram showing the frequency spectrum of the noise signal radiated from the receiver casing.

### DESCRIPTION OF A PREFERRED EMBODIMENT

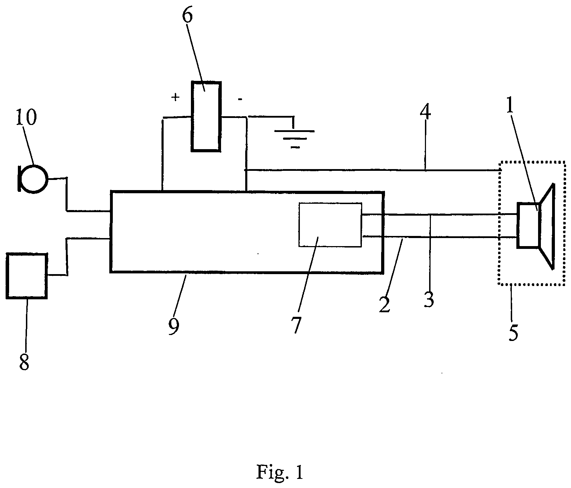

A schematic view of a hearing aid according to an embodiment of the invention is shown in fig. 1. The hearing aid comprises a microphone 10 and a wireless receiving antenna 8, both connected to a DSP unit 9. The DSP unit comprises a sigma-delta modulator 7, and also the DSP unit is connected to a battery 6 and a receiver 1. The receiver 1 is driven by a sigma delta modulated signal, which is produced by the modulator 7, and when the receiver 1 demodulates this signal, it produces an audio signal. Two wires 2,3 are required for the actual sigma delta modulated signal. A third wire 4 is connected to a metal casing 5 of the receiver 1. This wire 4 is grounded, which means that it is connected to the ground or the zero potential. The ground in this case is zero potential. Usually, it is defined as the negative battery potential but it could also be any other stable voltage potential within the hearing aid.

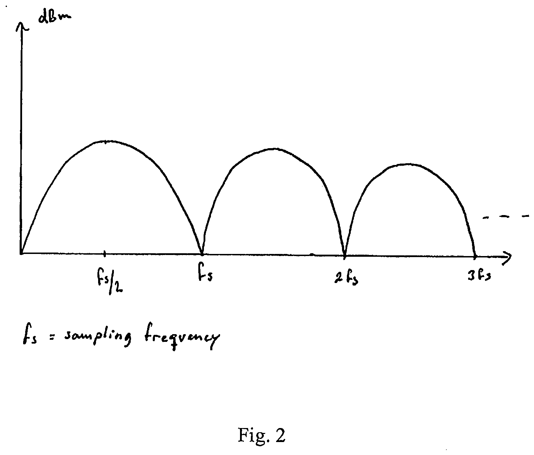

The radiated noise from the receiver casing and the two wires 2,3 is the modulation noise of the sigma delta modulator 7. The general measured spectrum is as depicted in Fig. 2. The sigma delta modulator 7 is used in hearing aids because of its low noise in the audio band compared with ordinary quantisation of the audio signal. The disadvantage is the higher noise in the high frequency range and as can be seen in fig. 2 this noise remains at a high level even at very high frequencies. This is generally not a problem for hearing aids where the audio band is of prime concern. However when the hearing aid is equipped with means 8 for receiving wireless signals in the same frequency range as the noise signal, this noise is very disturbing, and it is necessary to apply special measures to dampen this noise. By connecting the receiver metal casing 5 with the zero potential in the hearing aid the noise which is radiated is reduced considerably because the grounded case will act as a shield towards the electrical fields generated inside the case. Furthermore, any magnetic fields inside the case will induce currents that will run in the conducting case of the speaker. If the speaker case has a floating potential large voltages will be generated on the case surface. This is prevented when the casing is effectively shorted to ground by connecting the receiver case to the zero potential.

The connections 2,3 between the receiver and the other parts of the hearing aid, and also the connection 4 between the case and ground potential could be made by conducting wire. Generally, all 3 wires should be as short as possible as these wires also generate noise. Therefore, the resulting resistance should be in the order of a few milliohms, preferably below 5mOhms.

## Claims

1. A hearing aid comprising a power supply (6), a signal processing device (9), means (8) for receiving a wireless signal and a loudspeaker (1), adapted to produce an audio signal based on a modulated pulsed signal with high frequency shifting rate produced by the signal processing device, where the loudspeaker (1) has a first and a second connection point for receiving the pulsed modulated signal wherein the sound producing parts of the loudspeaker (1) are at least partially enclosed by a metal box (5), **CHARACTERIZED IN THAT** a third connection point is provided which is in electrical contact with the metal of the metal box (5) and whereby this third connection point is connected to the electric circuitry of the hearing aid at a point having a stable and well defined electrical potential.

2. A hearing aid as claimed in claim 1, wherein the third connection point is connected to ground potential, which is the negative pole of the power supply (6).

3. A hearing aid as claimed in any one of claims 1-2, wherein the modulated pulsed signal is a sigma delta modulated signal.

4. A hearing aid as claimed in any one of claims 1-3, wherein the resulting resistance of the connections (2, 3, 4) between the loudspeaker (1) and the signal processing unit (9) and between the loudspeaker casing (5) and the electric circuitry of the hearing aid is in the order of a few milliohms, preferably below 5 mOhms.

5. A hearing aid as claimed in any one of claims 1-4, wherein the means (8) for receiving a wireless signal comprises a coil antenna.

## Patentansprüche

1. Hörhilfe mit einer Energieversorgung (6), einer Signalverarbeitungsvorrichtung (9), Mitteln (8) zum Empfangen eines drahtlos übermittelten Signals und mit einem Lautsprecher (1), der ausgebildet ist ein Audiosignal auf Basis eines modulierten gepulsten Signals mit durch die Signalverarbeitungsvorrichtung erzeugter hochfrequenter Umtastrate zu erzeugen, wobei der Lautsprecher (1) einen ersten und einen zweiten Anschlusspunkt zum Empfangen des gepulsten modulierten Signals hat und wobei die schallerzeugenden Teile des Lautsprechers (1) wenigstens teilweise von einer Metallbox (5) umschlossen sind,
**dadurch gekennzeichnet, dass**
ein dritter Anschlusspunkt bereitgestellt ist, welcher in elektrischem Kontakt mit dem Metall der Metallbox (5) ist, und wobei der dritte Anschlusspunkt mit der elektrischen Schaltung der Hörhilfe an einem Punkt mit einem stabilen und wohldefinierten elektrischen Potential angeschlossen ist.

2. Hörhilfe nach Anspruch 1, wobei der dritte Anschlusspunkt mit dem Massepotential verbunden ist, welches der Minuspol der Energieversorgung (6) ist.

3. Hörhilfe nach mindestens einem der Ansprüche 1 bis 2, wobei das modulierte gepulste Signal ein Sigma-Delta-moduliertes Signal ist.

4. Hörhilfe nach mindestens einem der Ansprüche 1 bis 3, wobei der resultierende Widerstand der Anschlüsse (2, 3, 4) zwischen dem Lautsprecher (1) und der Signalverarbeitungseinheit (9) und zwischen dem Lautsprechergehäuse (5) und der elektrischen Schaltung der Hörhilfe in der Größenordnung von wenigen Milliohm, insbesondere unterhalb von 5 Milliohm ist

5. Hörhilfe nach mindestens einem der Ansprüche 1 bis 4, wobei die Mittel (8) zum Empfangen eines drahtlos übermittelten Signals eine Antennenspule aufweisen.

## Revendications

1. Aide auditive comprenant une alimentation électrique (6), un dispositif de traitement de signal (9), un moyen (8) de réception d'un signal sans fil et un haut-parleur (1), adaptée pour produire un signal audio basé sur un signal pulsé modulé avec taux de décalage haute fréquence produit par le dispositif de traitement de signal, où le haut-parleur (1) possède un premier et un second point de connexion pour recevoir le signal modulé pulsé où les parties produisant le son du haut-parleur (1) sont au moins partiellement entourées par une boîte métallique (5), **CARACTERISÉE EN CE QU'**est fourni un troisième point de connexion qui en contact électrique avec le métal de la boîte métallique (5) et de sorte que ce troisième point de connexion est connecté au circuit électrique de l'aide auditive en un point présentant un potentiel électrique stable et bien défini.

2. Aide auditive selon la revendication 1, où le troisième point de connexion est connecté au potentiel de masse, qui est le pôle négatif de l'alimentation électrique (6).

3. Aide auditive selon l'une quelconque des revendications 1-2, où le signal pulsé modulé est un signal modulé en sigma delta.

4. Aide auditive selon l'une quelconque des revendications 1-3, où la résistance résultante des connexions (2, 3, 4) entre le haut-parleur (1) et l'unité de traitement de signal (9) et entre le boîtier de haut-parleur (5) et le circuit électrique de l'aide auditive est de l'ordre de quelques milliohms, de préférence inférieure à 5 mOhms.

5. Aide auditive selon l'une quelconque des revendications 1-4, où le moyen (8) de réception d'un signal sans fil comprend une antenne à bobine.
